Europäisches Patentamt

European Patent Office

Office européen des brevets

(11) Veröffentlichungsnummer: **0 188 019**

**A1**

# (12) EUROPÄISCHE PATENTANMELDUNG

(21) Anmeldenummer: 85202010.6

(22) Anmeldetag: 03.12.85

(51) Int. Cl.⁴: **B 01 D 1/26**
**D 21 C 11/10**

(30) Priorität: 14.12.84 DE 3445670

(43) Veröffentlichungstag der Anmeldung:
23.07.86 Patentblatt 86/30

(84) Benannte Vertragsstaaten:
AT DE FR SE

(71) Anmelder: METALLGESELLSCHAFT AG
Reuterweg 14 Postfach 3724
D-6000 Frankfurt/M.1(DE)

(72) Erfinder: Hohmann, Klaus
Waldstrasse 5
D-6238 Hofheim 5(DE)

(74) Vertreter: Rieger, Harald, Dr.
Reuterweg 14
D-6000 Frankfurt am Main(DE)

(54) Verfahren zur Reinigung von Brüdenkondensat.

(57) Für die Anreicherung und Abtrennung von leicht flüchtigen Verunreinigungen aus Brüdenkodensaten, die bei der mehr-stufigen Aufkonzentrierung von Flüssigkeiten anfallen und wobei ein Brüdenkondensat-Teilstrom mit höherer Anreiche-rung an Verunreinigungen abgetrennt und einer besonderen Reinigungsbehandlung unterworfen wird, wird ein Verfahren vorgeschlagen, das eine wirtschaftlich günstigere und flexibler zu handhabende Abtrennung der Verunreinigungen ermöglicht. Dazu werden die Brüden aus der flüssigkeits-seitig ersten Verdampferstufe (1) nacheinander in zwei brüdenund kondensatseitig voneinander abgetrennte Teilkammern des der Verdampfung der Flüssigkeit dienenden Wärmetauschers der flüssigkeitsseitig nachfolgenden, zweiten Verdampferstufe geführt und dort in zwei Teilströmen kondensiert.

EP 0 188 019 A1

./...

Fig.1

0188019

MBTALLGESELLSCHAFT AG                    12. Dezember 1984
Reuterweg 14                             MLK/OKU (1920P)

6000 Frankfurt/Main 1


Prov.Nr. 9020 L


## Verfahren zur Reinigung von Brüdenkondensat

Die Erfindung bezieht sich auf ein Verfahren zur Verbesserung der Anreicherung und Abtrennung leicht flüchtiger Verunreinigungen aus Brüdenkondensaten, die bei der mehrstufigen Aufkonzentrierung von Flüssigkeiten, insbesondere beim Eindampfen von Zellstoffablaugen anfallen, wobei ein Brüdenkondensat-Teilstrom mit höherer Anreicherung an Verunreinigungen als in den Brüden abgetrennt und einer besonderen Reinigungsbehandlung unterworfen wird

Brüdenkondensate aus Eindampfprozessen sind häufig durch leicht flüchtige Bestandteile verunreinigt, so daß sie nicht ohne weiteres in den Produktionsprozeß rückgeführt oder als Abwasser abgegeben werden können. Beim Eindampfen von Zellstoffablaugen bestehen die leicht flüchtigen Verunreinigungen insbesondere aus Methanol und TRS (Total Reduced Sulfur), deren Abtrennung von den Brüden bisher nicht zufriedenstellend gelöst werden konnte.

Aus der DE-OS 31 20 586 ist z.B. ein Verfahren bekanntgeworden, bei dem der einem brüdenbeheizten Hauptheizkörper brüdenseitig üblicherweise nachgeschaltete Vorwärmer zur Platzersparnis und damit Reduzierung der Investitionen konstruktiv in den Hauptheizkörper integriert ist und bei dem die im Hauptheizkörper und im Vorwärmer anfallenden Brüdenkondensate getrennt abgeführt werden, wie dies auch schon bei getrennter Aufstellung der Vorwärmer vorgeschlagen worden ist. Die in den Vorwärmern anfallenden Brüdenkondensate sind mit leicht flüchtigen Verunreinigungen stärker angereichert als die in den Hauptheizkörpern anfallenden Brüdenkondensate. Während letztere in der Regel unbehandelt abgegeben werden, werden erstere häufig einer Reinigungsbehandlung unterworfen.

Bei diesen und anderen Verfahren ist die Aufteilung der insgesamt anfallenden, durch leicht flüchtige Bestandteile verunreinigten Brüden vom Wärmebedarf im Hauptheizkörper bzw. im brüdenseitig nachfolgenden Vorwärmer abhängig. Im Hinblick auf die für den Wärmeübergang erforderliche Mindest-Temperaturdifferenz und die wirtschaftlichen Grenzen bei der Auslegung der Wärmetauscherfläche, werden in dem der Verdampfung der Flüssigkeit dienenden Hauptheizkörpern etwa 95 % der in eine Verdampferstufe eingeleiteten Brüden kondensiert, während in dem Vorwärmer der gleichen Verdampferstufe demzufolge nur die restlichen 5 % kondensiert werden können. Das hängt damit zusammen, daß im Vorwärmer nur Flüssigkeit aufgewärmt wird, was mit einem Anstieg der Temperatur verbunden ist, während im Hauptheizkörper sowohl auf der Verdampfungs- als auch auf der Kondensationsseite im wesentlichen gleichbleibende Temperaturen herrschen, da hier eine Verdampfung stattfindet.

Wegen dieser unveränderlichen Mengenaufteilung ist es bei derartige Verfahren nicht möglich, die Abtrennung der leicht flüchtigen Verunreinigungen aus dem Brüdenkondensat zu optimieren. Zwar enthalten die im Vorwärmer anfallenden Kondensatmengen eine verhältnismäßig hohe Konzentration an leicht flüchtigen Verunreinigungen; diese sind absolut gesehen aber zu gering, um die Verunreinigungen im wünschenswerten Umfang und mit geringstmöglichem Energieaufwand aus dem Produktionsprozeß auszuschleusen.

Auf der anderen Seite ist die Gesamtmenge an Verunreinigungen in den im Hauptheizkörper anfallenden großen Kondensatmengen häufig zu hoch, als daß sie weiterverwendet oder ohne weiteres als Abwasser abgeführt werden könnten, aber in der Konzentration zu niedrig, als daß die großen Kondensatmengen mit wirtschaftlich vertretbarem Aufwand zu reinigen wären.

Hinzu kommt, daß die unveränderbare Aufteilung der Kondensatmengen bei den herkömmlichen Verfahren es ausschließt, daß der Reinigungsaufwand bei wechselnden Gehalten an leicht flüchtigen Verunreinigungen sinnvoll an die geänderten Bedingungen angepaßt werden kann.

Es besteht somit die Aufgabe, bei der Anreicherung leicht flüchtiger Verunreinigungen im Brüdenkondensat mit anschließender Abtrennung die beschriebenen Nachteile zu vermeiden, d.h. ein Verfahren der eingangs genannten Art vorzuschlagen, bei dem die insgesamt aus dem Produktionsprozeß abzuführende Menge an leicht flüchtigen Verunreinigungen in einem nach Menge und Konzentration frei zu wählenden und optimal einzustellenden Kondensat-Teilstrom angereichert ist.

Diese Aufgabe wird erfindungsgemäß dadurch gelöst, daß die Brüden aus der flüssigkeitsseitig ersten Verdampferstufe nacheinander in zwei brüden- und kondensatseitig voneinander abgetrennte Teilkammern des der Verdampfung der Flüssigkeit dienenden Wärmetauschers der flüssigkeitsseitig nachfolgenden, zweiten Verdampferstufe geführt und dort in zwei Teilströmen kondensiert werden.

In Weiterbildung des Erfindungsgedankens ist vorgesehen, daß auch die Brüden aus der flüssigkeitsseitig zweiten Verdampferstufe nacheinander in zwei brüden- und kondensatseitig voneinander abgetrennten Teilkammern des der
Verdampfung der Flüssigkeit dienenden Wärmetauschers der
flüssigkeitsseitig nachfolgenden dritten Verdampferstufe
geführt und dort in zwei Teilströmen kondensiert werden.
Von den insgesamt in die flüssigkeitsseitig zweite Verdampferstufe eingeleiteten Brüden werden vorzugsweise 50
bis 70 % in der zweiten Teilkammer des Wärmetauschers kondensiert, während von den insgesamt in die flüssigkeitsseitig dritte Verdampferstufe eingeleiteten Brüden 15 bis
50 % in der zweiten Teilkammer des Wärmetauschers kondensiert werden.

Zeckmäßigerweise werden die Brüden in der ersten Teilkammer jeweils im Gleichstrom und in der zweiten Teilkammer jeweils im Gegenstrom zum ablaufenden Brüdenkondensat geführt. Ferner ist vorgesehen, daß die in den zweiten
Teilkammern anfallenden Brüdenkondensate gemeinsam im
einem Stripper von den leicht siedenden Verunreinigungen
befreit werden und daß das zu strippende Brüdenkondensat
durch Restbrüden aus einem der Strippkolonne zugeordneten
Vorwärmer vorgewärmt wird. Schließlich ist die Erfindung
sinngemäß auch auf die den Verdampferstufen brüdenseitig
nachfolgende Kondensationsstufe in den Fällen anwendbar,
in denen die Kondensationsstufe brüdenseitig unmittelbar
auf die flüssigkeitsseitig zweite bzw. erste Verdampferstufe folgt.

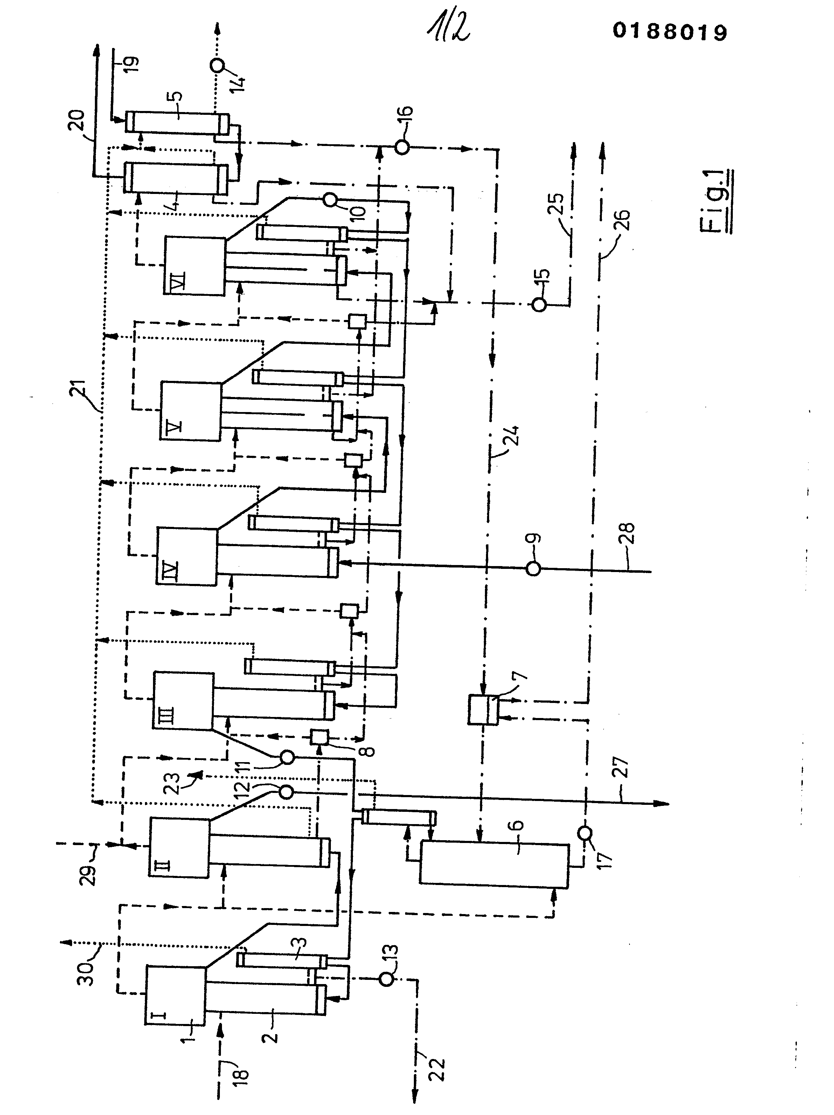

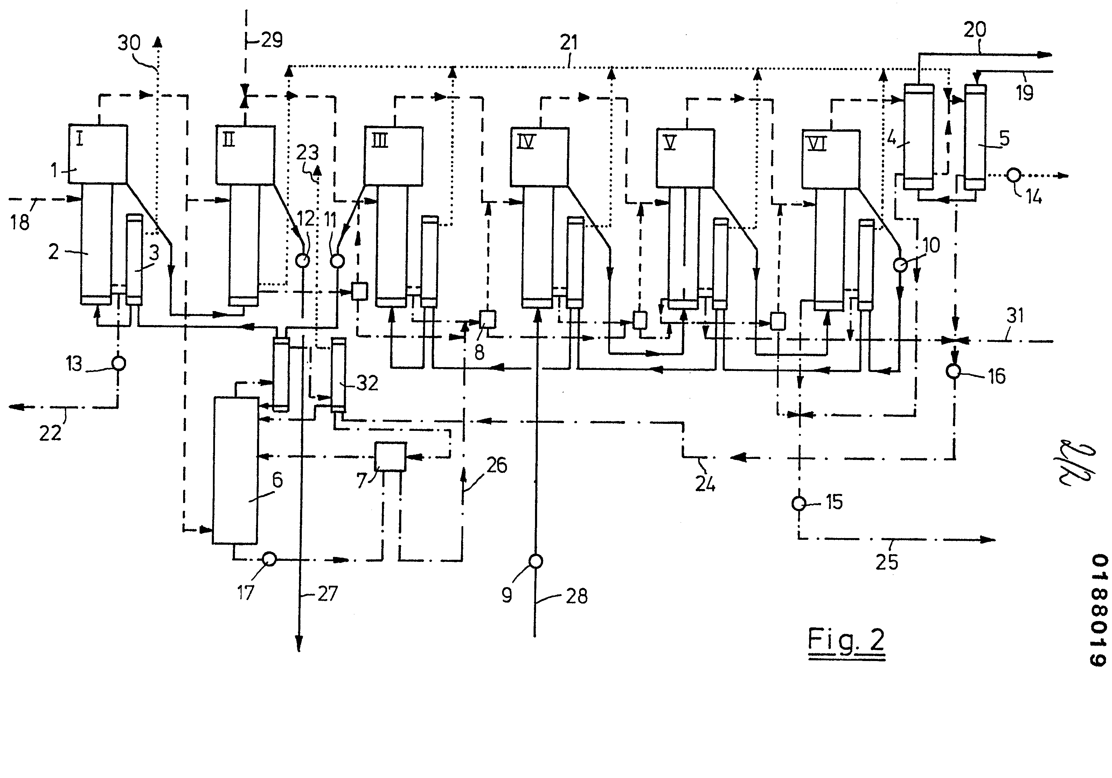

Weitere Einzelheiten und Vorteile des Erfindungsgedankens
werden anhand der Figuren 1 und 2 in Verbindung mit den
zugehörigen Beispielen 1 und 2 näher erläutert.

Figur 1 zeigt das Schaltschema einer sechsstufigen Eindampfanlage mit Brüdenkondensat-Rektifikation.

Figur 2 zeigt eine Variante zu Figur 1.

- 5 -                                              0188019

Es bedeuten in beiden Figuren:

| | | |
|---|---|---|
| 1 | = | Verdampfer (Separatoren) |
| 2 | = | Heizkörper |
| 3 | = | Vorwärmer |
| 4,5 | = | Oberflächenkondensator |
| 6 | = | Rektifizierkolonne (Stripp-Kolonne) |
| 7 | = | Wärmetauscher |
| 8 | = | Entspanner |
| 9,10,11,12 | = | Pumpen für die einzudampfende Flüssigkeit |
| 13 | = | Pumpe für Frischdampfkondensat |
| 14 | = | Vakuumpumpe |
| 15,16 | = | Pumpe für Brüdenkondensat |
| 17 | = | Pumpe für gestripptes Brüdenkondensat |
| 18 | = | Frischdampfleitung |
| 19,20 | = | Kühlwasserleitung |
| 21 | = | Leitung für Entlüftungen |
| 22 | = | Leitung für Frischdampfkondensat |
| 23 | = | Abgasleitung für methanol- und TRS-haltige Abgase |
| 24 | = | Brüdenleitung zur Rektifizierkolonne |
| 25 | = | Leitung für schwach verunreinigtes Brüdenkondensat |
| 26 | = | Leitung für gestripptes Brüdenkondensat |
| 27 | = | Leitung für konzentrierte Flüssigkeit |
| 28 | = | Leitung für einzudampfende Flüssigkeit |
| 29 | = | Brüdenleitung vom Endkonzentrator |
| 30 | = | Entlüftung der frischdampfbeheizten Stufe |
| 31 | = | Leitung für Kondensat aus anderen Anlageteilen |
| 32 | = | Nachkondensator |

Beispiel 1

Die Eindampfanlage gemäß Figur 1 besteht aus sechs Stufen I bis VI. Jede Stufe besteht aus einem Verdampfer 1
und einem Heizkörper 2. Über die Leitung 28 werden mittels
Pumpe 9 284.900 kg/h einzudampfende Schwarzlauge mit
19 % TS und 95,5°C in die Stufe IV gepumpt. Von dort fließt die Schwarzlauge in die Stufe V und weiter in die
Stufe VI. Aus der Stufe VI wird die Schwarzlauge mit der
Pumpe 10 durch die Vorwärmer 3 in die Stufe III gepumpt.
Aus der Stufe III wird die Schwarzlauge mit der Pumpe 11
durch weitere Vorwärmer in die Stufe I gepumpt. Aus der
Stufe I fließt die Schwarzlauge in die Stufe II. Von dort
werden mit der Pumpe 12 93.300 kg/h aufkonzentrierte
Schwarzlauge mit 58 % TS und 107,8°C abgezogen und über
die Leitung 27 aus der Anlage abgeführt.

Diese Schwarzlauge wird in einem nicht dargestellten
frischdampfbeheizten Endkonzentrator auf die Endkonzentration von 65 % eingedampft. Aus dem Endkonzentrator werden
über die Leitung 29 dem Heizkörper 2 der Stufe III
8.550 kg/h Brüden zum Beheizen zugeführt. Der Heizkörper 2
der Stufe I wird über die Leitung 18 mit 31.700 kg/h
gesättigtem Frischdampf von 140°C versorgt. Die in den
einzelnen Stufen anfallenden Brüden dienen zum Beheizen
der nachfolgenden Stufen. Die Brüden der Stufe VI werden
in einem Oberflächenkondensator 4 bei 53°C kondensiert.
Die nicht kondensierten Brüden werden zusammen mit den
über die Rohrleitung 21 zugeführten Entlüftungsströmen aus
den einzelnen Stufen in einem zweiten Oberflächenkondensator 5 kondensiert. Die nicht kondensierbaren Abgase werden mit einer Vakuumpumpe 14 abgesaugt, wodurch in der
Stufe VI ein Sattdampfdruck entsprechend einer Temperatur
von 53°C aufrechterhalten wird. Zur Kondensation der Brüden in den Oberflächenkondensatoren 4 und 5 werden
770 m$^3$/h Kühlwasser von 12 auf 45°C aufgewärmt. Das
Kühlwasser wird über die Rohrleitung 19 zu- und über die
Rohrleitung 20 abgeführt.

Das in dem Heizkörper 2 und Vorwärmer 3 der Stufe I anfallende Frischdampfkondensat in einer Menge von 31.600 kg/h
wird mittels Pumpe 13 über die Leitung 22 abgeführt.

Gemäß der Erfindung werden die Brüdenkondensate so geführt, daß Brüdenkondensate, die viel Methanol und TRS enthalten, separat aufgefangen und zur Strippkolonne 6 geführt werden. Die verunreinigten, zur Strippkolonne zu führenden Brüdenkondensate setzen sich wie folgt zusammen:

Der Heizkörper 2 der Stufe V wird mit 37.650 kg/h Brüden aus der Stufe IV einschließlich der Entspannungsbrüden aus dem Entspanner 8 beheizt. Der Heizkörper 2 der Stufe V ist auf der Brüdenseite so unterteilt, daß 17.800 kg/h in einem ersten Teilstrom kondensiert werden. Die restlichen 19.850 kg/h Brüden werden in die zweite Teilkammer geführt, wo ein zweiter Teilstrom von 16.500 kg/h kondensiert. Im Vorwärmer 3 der Stufe V kondensieren weitere 2.000 kg/h. Die restlichen 1.350 kg/h werden als Entlüftungsbrüden aus diesem Vorwärmer abgezogen. In der Stufe V fallen also insgesamt 18.500 kg/h Brüdenkondensat aus der zweiten Teilkammer und dem Vorwärmer 3 an, das getrennt von dem Brüdenkondensat der ersten Teilkammer aufgefangen wird.

Zum Beheizen des Heizkörpers 2 der Stufe VI werden 39.450 kg/h Brüden zugeführt. In der ersten Teilkammer des Heizkörpers 2 der Stufe VI kondensieren 32.100 kg/h. 7.350 kg/h werden in die zweite Teilkammer geleitet. Davon kondensieren hier 4.500 kg/h und 1.500 kg/h im Vorwärmer 3 der Stufe VI. Die restlichen 1.350 kg/h werden als Entlüftungsbrüden aus dem Vorwärmer 3 der Stufe VI abgezogen. Das in der zweiten Teilkammer des Heizkörpers 2 der Stufe VI und dem Vorwärmer 3 der Stufe VI anfallende Brüdenkondensat beläuft sich danach insgesamt auf 6.000 kg/h und wird getrennt von dem Brüdenkondensat der ersten Teilkammer des Heizkörpers 2 der Stufe VI aufgefangen.

Die mit Methanol und TRS stark verunreinigten Brüdenkondensate der zweiten Teilkammern und der Vorwärmer 3 der Stufen V und VI werden mit den 5.000 kg/h Brüdenkondensat aus dem zweiten Oberflächenkondensator 5 zusammengeführt, so daß mit der Pumpe 16 insgesamt 29.500 kg/h Brüdenkondensat über die Leitung 24 und den Wärmetauscher 7 zur Strippkolonne 6 gefördert werden.

Die Strippung erfolgt mit 6.000 kg/h Brüden aus der Stufe I. Diese Brüden enthalten praktische kein Methanol und TRS und werden im Gegenstrom zu dem zu strippenden Brüdenkondensat geführt. Die im Kopf der Strippkolonne austretenden, mit Methanol und TRS angereicherten Brüden werden zu einem Vorwärmer 3 geleitet. In diesem Vorwärmer wird die aus der Stufe III mittels der Pumpe 11 abgezogene Schwarzlauge aufgewärmt, so daß in dem Vorwärmer 3 5.200 kg/h kondensiert werden und als Rücklauf zur Strippkolonne fließen. Aus dem Vorwärmer werden 800 kg/h Methanol und TRS-Gase als Entlüftung mit einer Temperatur von ca. 116°C und einem Druck von ca. 2 bar über die Leitung 23 abgezogen. In diesem Strom sind etwa 78 % des in der Dünnlauge enthaltenen Methanols angereichert. Durch die Erfindung ist es also möglich, in 14,75 %, d.h. 29.500 kg/h von 200.000 kg/h gesamtem anfallendem Brüdenkondensat so viel Methanol anzureichern, daß durch Strippung 78 % des gesamten, zur Eindampfanlage geführten Methanols abgetrennt werden. Das in der Strippkolonne im Sumpf anfallende Brüdenkondensat von 34.700 kg/h ist weitgehend von Methanol und TRS frei und wird mittels Pumpe 17 über den Wärmetauscher 7, in dem eine Abkühlung erfolgt, unter gleichzeitiger Aufwärmung des zu strippenden Brüdenkondensats mit einer Temperatur von ca. 80°C über die Leitung 26 abgezogen und kann in der Zellstoffabrik in anderen Prozessen wieder eingesetzt werden.

Die im Heizkörper 2 der Stufe II, dem Heizkörper 2 und Vorwärmer 3 der Stufe III, dem Heizkörper 2 und Vorwärmer 3 der Stufe IV und der ersten Teilkammer des Heizkörpers 2 der Stufe V anfallenden Brüdenkondensat werden kontinuierlich über die Entspanner 8 entspannt und zusammen mit dem Brüdenkondensat der ersten Teilkammer des Heizkörpers 2 der Stufe VI und des Oberflächenkondensators 4 mit der Pumpe 15 über die Leitung 25 aus der Eindampfanlage abgegeben. Insgesamt sind dies 164.500 kg/h mit einer Temperatur von ca. 64°C. Da dieses Brüdenkondensat nur wenig Methanol enthält, kann es in der Zellstoffabrik ohne Reinigungsbehandlung weiterverwendet werden.

Beispiel 2

Die Eindampfanlage gemäß Figur 2 besteht ebenfalls aus sechs Stufen I bis VI. Jede Stufe besteht aus einem Verdampfer 1 und einem Heizkörper 2.

Über die Leitung 28 werden mittels Pumpe 9 199.430 kg/h einzudampfende Schwarzlauge mit 19 % TS und 95,5°C in die Stufe IV gepumpt. Von dort fließt die Schwarzlauge in die Stufe V und weiter in die Stufe VI. Aus der Stufe VI wird die Schwarzlauge mit der Pumpe 10 durch die Vorwärmer 3 in die Stufe III gepumpt und aus der Stufe III wird die Schwarzlauge mit der Pumpe 11 durch weitere Vorwärmer in die Stufe I gepumpt. Aus der Stufe I fließt die Schwarzlauge in die Stufe II. Von dort werden mit der Pumpe 12 65.310 kg/h aufkonzentrierte Schwarzlauge in 58 % TS und 107,8°C über die Leitung 27 aus der Eindampfanlage abgeführt.

Diese Schwarzlauge wird in einem nicht dargestellten frischdampfbeheizten Endkonzentrator auf eine Endkonzentration von 65 % TS eingedampft. Aus dem Endkonzentrator werden über die Leitung 29 dem Heizkörper 2 der Stufe III 5.990 kg/h Brüden zum Beheizen zugeführt. Der Heizkörper 2 der Stufe I wird über die Rohrleitung 18 mit 22.190 kg/h gesättigtem Frischdampf von 140°C versorgt. Die in den einzelnen Stufen anfallenden Brüden werden zum Beheizen
der nachfolgenden Stufen verwendet. Die Brüden der Stufen VI werden in einem Oberflächenkondensator 4 bei 53°C
kondensiert. Die nicht kondensierten Brüden werden zusammen mit den über die Rohrleitung 21 geführten Entlüftungsströmen aus den einzelnen Stufen in einem zweiten Oberflächenkondensator 5 kondensiert. Die nicht kondensierbaren Abgase werden mit einer Vakuumpumpe 14 abgesaugt,
wodurch ein Sattdampfdruck entsprechend einer Temperatur
von 53°C in der Stufe VI aufrechterhalten wird. Zur Kondensation der Brüden in den Oberflächenkondensatoren 4 und
5 werden 710 m$^3$/h Kühlwasser von 15 auf 40°C aufgewärmt.
Das Kühlwasser wird über die Rohrleitung 19 zu- und über
die Rohrleitung 20 abgeführt. Das in dem Heizkörper 2 und
Vorwärmer 3 der Stufe I anfallende Frischdampfkondensat
von 22.100 kg/h wird mittels Pumpe 13 über die Leitung 22
abgeführt.

Gemäß der Erfindung werden die Brüdenkondensate so geführt, daß Brüdenkondensate, die viel Methanol und TRS
enthalten, separat aufgefangen und zur Strippkolonne 6 geführt werden, wobei außerdem noch Kocherei-Kondensate gestrippt werden können, die über die Leitung 31 zugeführt
werden. Die verunreinigten, zur Strippkolonne zu führenden
Brüdenkondensate setzen sich wie folgt zusammen:

Der Heizkörper 2 der Stufe V wird mit 26.370 kh/h Brüden
aus der Stufe IV einschließlich der Entspannungsbrüden aus
dem Entspanner 8 beheizt. Der Heizkörper 2 der Stufe V ist
auf der Brüdenseite so unterteilt, daß 17.020 kg/h in der
ersten Teilkammer kondensiert werden. Die restlichen
9.350 kg/h werden in die zweite Teilkammer geführt, wo
7.000 kg/h kondensieren. 1.400 kg/h kondensieren im Vorwärmer 3 der Stufe V. Die restlichen 950 kg/h werden als
Entlüftungsbrüden aus diesem Vorwärmer abgezogen.

In der Stufe V fallen also insgesamt 8.400 kg/h Brüdenkondensat aus der zweiten Teilkammer und dem Vorwärmer 3 an. Dieses Brüdenkondensat wird getrennt von dem Brüdenkondensat der ersten Teilkammer aufgefangen.

Zum Beheizen des Heizkörpers 2 der Stufe VI werden 27.610 kg/h Brüden zugeführt. Davon werden 25.750 kg/h im Heizkörper 2 der Stufe VI kondensiert. Die restlichen 1.860 kg/h werden in den Vorwärmer 3 der Stufe VI geführt. In dem Vorwärmer kondensieren 1.060 kg/h. Die restlichen 800 kg/h werden als Entlüftungsbrüden aus dem Vorwärmer 3 der Stufe VI abgezogen. Das Brüdenkondensat aus Vorwärmer 3 der Stufe VI wird separat vom Brüdenkondensat des Heizkörpers 2 der Stufe VI aufgefangen.

Die mit Methanol und TRS stark verunreinigten Brüdenkondensate der zweiten Teilkammer der Stufe V und der Vorwärmer der Stufen V und VI werden mit den 3.500 kg/h Brüdenkondensat des Oberflächenkondensators 5 zusammengeführt, so daß aus der Eindampfanlage insgesamt 12.960 kg/h zu strippendes Brüdenkondensat mit ca. 67,5°C anfallen. Diesem Brüdenkondensat werden über die Leitung 31 zusätzlich 7.000 kg/h ebenfalls mit Methanol und TRS verunreinigtes Kondensat aus der Kocherei mit einer Temperatur von 70°C zugeführt. Insgesamt werden damit 19.960 kg/h Brüdenkondensat mittels Pumpe 16 über die Leitung 24, den Nachkondensator 32 und den Wärmetauscher 7 zur Strippkolonne 6 gefördert.

Die Strippung erfolgt mit 4.200 kg/h Brüden aus der Stufe I. Diese Brüden enthalten praktisch kein Methanol und TRS und werden im Gegenstrom zu dem zu strippenden Brüdenkondensat geführt. Die am Kopf der Strippkolonne austretenden, mit Methanol und TRS angereicherten Brüden werden zu einem Vorwärmer 3 geleitet. In diesem Vorwärmer wird die aus der Stufe III mittels der Pumpe 11 abgezogene Schwarzlauge aufgewärmt, wobei hier 3.640 kg/h Brüden kondensieren und als Rücklauf in die Strippkolonne gegeben
werden. Aus diesem Vorwärmer werden noch 560 kg/h Brüden
abgezogen und zu einem Nachkondensator 32 geführt. In dem
Nachkondensator 32 werden 300 kg/h Brüden kondensiert, wobei gleichzeitig die 19.960 kg/h zu strippendes Brüdenkondensat von 68,5 auf 76°C aufgewärmt werden. Die restlichen
260 kg/h stark mit Methanol und TRS angereicherten Brüden
werden mit einem Druck von ca. 2 bar und einer Temperatur
von etwa 110°C über die Leitung 23 abgezogen. Diesem Strom
sind etwa 65 % des in der Dünnlauge enthaltenen Methanols
angereichert. Zusätzlich enthält der Strom das Methanol,
das mit dem Kocherei-Kondensat zugeführt worden ist.

Durch die Erfindung ist es also möglich in nur 9,3 %, d.h.
12.960 kg/h von 140.000 kg/h gesamtem in der Eindampfanlage anfallendem Brüdenkondensat so viel Methanol anzureichern, daß durch die Strippung ca. 65 % des gesamten zur
Eindampfanlage geführten Methanols in einem separaten Abgasstrom abgetrennt werden können.

Eine weitere Besonderheit ist, daß als Kühlmedium im Nachkondensator 32 das zu strippende Brüdenkondensat verwendet
wird. Die 19.960 kg/h Brüdenkondensat werden dabei von
68,5 auf 76°C aufgewärmt.

Das in der Strippkolonne 6 im Sumpf anfallende Brüdenkondensat von insgesamt 23.900 kg/h ist weitgehend von Methanol und TRS frei und wird mit der Pumpe 17 über den Wärmetauscher 7 abgezogen, wobei eine Abkühlung auf ca. 87,5°C
erfolgt unter gleichzeitiger Aufwärmung des zu strippenden
Brüdenkondensates aus dem Nachkondensator 32. Dieses Brüdenkondensat wird dem entsprechenden Entspanner 8 zugeführt, so daß auch hier eine weitere Wärmenutzung gegeben
ist.

- 13 -

Das gesamte, durch Eindampfen aus der Dünnlauge gewonnene
Brüdenkondensat einschließlich des gestrippten Brüdenkondensates und des Kocherei-Kondensates von 147.000 kg/h und
einer Temperatur von ca. 64°C wird mit der Pumpe 15 aus
der Eindampfanlage abgezogen. Da es erfindungsgemäß nur
sehr wenig Mehtanol und TRS enthält, kann es ohne reinigende Nachbehandlung in anderen Prozessen der Zellstoffabrik wieder verwendet werden.

## PATENTANSPRÜCHE

1. Verfahren zur Verbesserung der Anreicherung und Abtrennung leicht flüchtiger Verunreinigungen aus Brüdenkondensaten, die bei der mehrstufigen Aufkonzentrierung von Flüssigkeiten, insbesondere beim Eindampfen von Zellstoffablaugen anfallen, wobei ein Brüdenkondensat-Teilstrom mit höherer Anreicherung an Verunreinigungen als in den Brüden abgetrennt und einer besonderen Reinigungsbehandlung unterworfen wird, dadurch gekennzeichnet, daß die Brüden aus der flüssigkeitsseitig ersten Verdampferstufe nacheinander in zwei brüden- und kondensatseitig voneinander abgetrennte Teilkammern des der Verdampfung der Flüssigkeit dienenden Wärmetauschers der flüssigkeitsseitig nachfolgenden, zweiten Verdampferstufe geführt und dort in zwei Teilströmen kondensiert werden.

2. Verfahren nach Anspruch 1, dadurch gekennzeichnet, daß die Brüden aus der flüssigkeitsseitig zweiten Verdampferstufe nacheinander in zwei brüden- und kondensatseitig voneinander abgetrennte Teilkammern des der Verdampfung der Flüssigkeit dienenden Wärmetauschers der flüssigkeitsseitig nachfolgenden, dritten Verdampferstufe geführt und dort in zwei Teilströmen kondensiert werden.

3. Verfahren nach Anspruch 2, dadurch gekennzeichnet, daß von den insgesamt in die flüssigkeitsseitig zweite Verdampferstufe eingeleiteten Brüden 50 bis 70 % in der zweiten Teilkammer des Wärmetauschers kondensiert werden.

4. Verfahren nach Anspruch 3, dadurch gekennzeichnet, daß von den insgesamt in die flüssigkeitsseitig dritte Verdampferstufe eingeleiteten Brüden 15 bis 50 % in der zweiten Teilkammer des Wärmetauschers kondensiert werden.

5. Verfahren nach einem der Ansprüche 1 bis 4, dadurch gekennzeichnet, daß die Brüden in der ersten Teilkammer jeweils im Gleichstrom und in der zweiten Teilkammer jeweils im Gegenstrom zum ablaufenden Brüdenkondensat geführt werden.

6. Verfahren nach einem der Ansprüche 1 bis 5, dadurch gekennzeichnet, daß die in den zweiten Teilkammern anfallenden Brüdenkondensate gemeinsam in einem Stripper von den leicht siedenden Verunreinigungen befreit werden.

7. Verfahren nach einem der Ansprüche 1 bis 6, dadurch gekennzeichnet, daß das zu strippende Brüdenkondensat durch Restbrüden aus einem der Strippkolonne zugeordneten Vorwärmer vorgewärmt wird.

8. Anwendung des Verfahrens nach einem der Ansprüche 1 bis 7 auf die Kondensationsstufe in den Fällen, in denen die Kondensationsstufe brüdenseitig unmittelbar auf die flüssigkeitsseitig zweite bzw. erste Verdampferstufe folgt.

Fig.1

0188019

Fig. 2

2/2

0188019

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | CHEMICAL ENGINEERING PROCESS, Band 79, Nr. 9, September 1983, Seiten 36-40, New York, US; J.D. LOGSDON: "Evaporator applications/trends in the pulp and paper industry"<br>* Seite 39, Zeile 1 - rechte Spalte, Zeile 9; Figuren 3,4 * | 1-4,6-8 | B 01 D 1/26<br>D 21 C 11/10 |
| | --- | | |
| X | US-A-4 333 800 (K.O. HENRICSON)<br>* Spalte 2, Zeilen 37-59; Spalte 3, Zeilen 47-59; Figuren 4,6; Spalte 6, Zeile 39 - Spalte 5, Zeile 10 * | 1-5 | |
| | --- | | |
| A | DE-B-1 092 442<br>(METALLGESELLSCHAFT) | | |
| | ----- | | |

**RECHERCHIERTE SACHGEBIETE (Int Cl 4)**

B 01 D
D 21 C

Der vorliegende Recherchenbericht wurde für alle Patentansprüche erstellt

| Recherchenort<br>DEN HAAG | Abschlußdatum der Recherche<br>07-04-1986 | Prüfer<br>VAN BELLEGHEM W.R. |
|---|---|---|